**Europäisches Patentamt**

**European Patent Office**

**Office européen des brevets**

(19)

(11) Veröffentlichungsnummer : **0 364 753 B1**

(12)

# EUROPÄISCHE PATENTSCHRIFT

(45) Veröffentlichungstag der Patentschrift :
**22.04.92 Patentblatt 92/17**

(51) Int. Cl.$^5$: **F16C 13/00**

(21) Anmeldenummer : **89117368.4**

(22) Anmeldetag : **20.09.89**

(54) **Durchbiegungssteuerbare Walze mit Zuimpfung.**

(30) Priorität : **15.10.88 DE 3835152**

(43) Veröffentlichungstag der Anmeldung :
**25.04.90 Patentblatt 90/17**

(45) Bekanntmachung des Hinweises auf die
Patenterteilung :
**22.04.92 Patentblatt 92/17**

(84) Benannte Vertragsstaaten :
**CH FR GB IT LI SE**

(56) Entgegenhaltungen :
**EP-A- 0 273 185**
**DE-A- 2 230 139**
**DE-A- 3 528 333**
**DE-B- 1 193 792**
**GB-A- 2 060 822**

(73) Patentinhaber : **Eduard Küsters**
**Maschinenfabrik GmbH & Co. KG**
**Gladbacher Strasse 457**
**W-4150 Krefeld 1 (DE)**

(72) Erfinder : **Kubik, Klaus**
**Hardenbergstrasse 90**
**W-4150 Krefeld (DE)**

(74) Vertreter : **Palgen, Peter, Dipl.-Phys. Dr.**
**Mulvanystrasse 2**
**W-4000 Düsseldorf (DE)**

EP 0 364 753 B1

## Beschreibung

Die Erfindung bezieht sich auf eine durchbiegungssteuerbare Walze der dem Oberbegriff des Anspruchs 1 entsprechenden Art.

Eine solche Walze ist aus der DE-A 22 30 139 bekannt. Bei der bekannten Ausführungsform ist ein kolbenartiges hydraulisches Stützelement in einer Zylinderbohrung des Querhauptes geführt. Von der unter dem Stützelement gebildeten Zylinderkammer führen Drosselbohrungen in die Lagertaschen in der Anlagefläche des Stützelements, mit welcher dieses am Innenumfang der Hohlwalze anliegt. Die der Zylinderkammer zugeführte Druckflüssigkeit tritt über die Drosselbohrungen in die Lagertaschen über und aus diesen über ihre Berandungen in den Zwischenraum zwischen Innenumfang der Hohwalze und Querhaupt aus. Zwischen den Berandungen und dem Innenumfang der Hohlwalze bildet sich also ein ständig erneuerter Flüssigkeitsfilm aus, so daß das Stützelement sowohl im Bereich der Lagertaschen also auch im Bereich der Berandungen über die Druckflüssigkeit am Innenumfang der Hohlwalze abgestützt ist.

Der Druck in den Lagertaschen kann ziemlich hoch sein, und es strömt also die zugeführte Druckflüssigkeit unter hohem Druck durch den sehr engen Spalt zwischen den Berandungen der Lagertaschen und dem Innenumfang der Hohlwalze nach außen ab. Dabei erwärmt sich diese abströmende Druckflüssigkeit. Zwar wird das Temperaturniveau der Hohlwalze im wesentlichen durch die den Zylinderkammern der Kolben/Zylindereinheiten der Stützelemente zugeführte Druckflüssigkeit bestimmt, doch treten durch die Flüssigkeitsreibung der an den Berandungen der Lagertaschen abströmenden Druckflüssigkeit zusätzliche Wärmebeträge auf, die ein gleichmäßiges Temperaturprofil längs der Hohlwalze schon merklich zu stören imstande sind. Die Temperatur der Hohlwalze erhöht sich im Bereich der Stützelemente etwas, und dies kann direkt, d.h. im Hinblick auf die Temperatur, aber auch indirekt, d.h. im Hinblick auf den im Bereich der Stützelemente durch die thermische Ausdehnung vergrößerten Durchmesser der Hohlwalze, für die Behandlung der Bahn unerwünschte Folgen haben.

Es läßt sich nachweisen, daß die an den einzelnen Stützelementen bei gleicher Spalthöhe h, d.h. bei gleicher Dicke des tragenden Druckflüssigkeitsfilms zwischen der Berandung der Lagertaschen und dem Innenumfang der Hohlwalze, beim Abströmen der Druckflüssigkeit aus den Lagertaschen entstehende Reibleistung innerhalb der Flüssigkeit grundsätzlich gleich ist. Es gibt jedoch einige Störgrößen zweiter Ordnung, die ebenfalls Einfluß auf die sich einstellende Temperatur haben.

Bei unterschiedlichen Drücken und konstanter Spalthöhe strömen unterschiedliche Mengen ab. Wenn die grundsätzlich bei allen Stützelementen gleiche Reibleistung in eine geringe Flüssigkeitsmenge eingeht, wie sie bei geringen Drücken aus den Lagertaschen abströmt, so ergibt sich eine stärkere Erhitzung dieser Flüssigkeitsmenge als wenn sich die gleiche Reibleistung auf eine große Flüssigkeitsmenge verteilt, wobei diese dann eine geringere Aufheizung erfährt.

Weiterhin wird beim Abströmen der Druckflüssigkeit auf den Stützelementen auch hydraulische Energie frei und verwandelt sich in Wärme.

Ferner hat auch die Änderung der Viskosität einen Einfluß, die sich durch die Aufheizung der Druckflüssigkeit während des Durchströmens des Spalts am Rande der Lagertaschen einstellt.

Schließlich spielt noch eine Rolle, daß bei kleinen Geschwindigkeiten im Spalt das Öl zwar heißer sein kann, allerdings der Wärmeübergang geringer ist. Bei größeren Geschwindigkeiten wird das Öl im Spalt zwar nicht so heiß, überträgt aber wegen seiner höheren Strömungsgeschwindigkeit mehr Wärme auf den Innenumfang der Hohlwalze.

Alle vorgenannten Effekte spielen insbesondere unter dem Aspekt eine Rolle, daß sie ein einmal vorhandenes Temperaturprofil stören, wenn das Linienkraftprofil geändert wird. Das Temperaturprofil ist also von dem Linienkraftprofil nicht mehr unabhängig, wenn bei einer Änderung der von einem einzelnen Stützelement ausgeübten Kraft sich zwangsweise die Temperatur im Bereich dieses Stützelements mit ändert.

Der Gesamtheit der vorstehend angesprochenen Wirkungsfaktoren sei unter dem Begriff "Flüssigkeitsreibung" verstanden.

Der Erfindung liegt die Aufgabe zugrunde, die durch die Flüssigkeitsreibung entstehenden zusätzlichen Wärmebeträge unschädlich zu machen.

Diese Aufgabe wird durch die in Anspruch 1 wiedergegebene Erfindung gelöst.

Der wesentliche Punkt ist, daß außer den normalen Drosselkanälen, durch die die Hauptmenge an Druckflüssigkeit den Lagertaschen zugeführt wird, ganz unabhängig diesen Lagertaschen weitere Druckflüssigkeitsmengen zugeführt werden können. Diese Druckflüssigkeitsmengen können gegenüber der Hauptmenge kälter sein, wodurch die Auswirkungen der beim Durchströmen des Spaltes an der Berandung der Lagertaschen entstehenden Wärmemenge neutralisiert werden können. Dies kann in einer Weise geschehen, in der die Druckausübung des Stützelements gegen der Innenumfang der Hohlwalze nicht beeinflußt wird. Dies ist eine Frage der Ausbildung der separaten Zuleitung, die wegen der Beweglichkeit der Stützelemente gegenüber dem Quer-

2

EP 0 364 753 B1

haupt entsprechend beweglich ausgebildet sein muß.

Die Erfindung ist aber nicht daran gebunden, daß die zusätzliche Druckflüssigkeit kälter ist als die Hauptmenge. Sie geht vielmehr über die den Ausgangspunkt bildende Problemstellung hinaus und beinhaltet schlechthin die Zuführung irgendeiner zusätzlichen Druckflüssigkeitsmenge also im Bedarfsfalle auch einer wärmeren.

Es ist zwar für sich genommen aus der DE-B- 11 93 792 schon bekannt, an einem Stützelement für eine umlaufende Hohlwalze zwei separate Zuleitungen vorzusehen. Hierbei handelt es sich aber um ein Stützelement anderer Art, bei dem nicht die die Anpressung des Stützelements bewerkstelligende Druckflüssigkeit zugleich auch die flüssigkeitsgestützte Lagerung desselben am Innenumfang der Hohlwalze übernimmt. Vielmehr wird eine Druckflüssigkeit einer geschlossenen Zylinderkammer zugefürt, die das Stützelement gegen den Innenumfang der Hohlwalze anpreßt. Ferner wird eine zweite Druckflüssigkeitsmenge den Lagertaschen in der Anlagefläche zugeführt. Nur diese Druckflüssigkeit tritt in die Lagertaschen über. Bei der Erfindung hingegen ist wesentlich, daß ein und derselben Lagertasche zwei verschiedene Druckflüssigkeiten zugeführt werden können.

Die Ausbildung der Zuleitung zwischen dem Querhaupt und dem beweglichen Stützelement kann verschieden sein.

Eine einfache Ausführungsform ist Gegenstand des Anspruchs 2.

Anstatt durch einen Schlauch kann die Beweglichkeit des Zuleitungsabschnitts auch durch eine teleskopartige Ausbildung desselben gegeben sein (Anspruch 3).

Insbesondere kann dies in der in Anspruch 4 wiedergegebenen Weise verwirklicht werden.

Um mehreren einander benachbarten Lagertaschen gleichzeitig von einer gemeinsamen Zuleitung her die zusätzliche Druckflüssigkeit zuimpfen zu können, empfiehlt sich die Ausbildung nach Anspruch 5.

Die Erfindung ist aus dem Problem entstanden, die Störung der tatsächlichen Temperaturverteilung bei einer Druckänderung unschädlich zu machen. Dies geschieht erfindungsgemäß, indem der den Lagertaschen für die Bildung der Linienkraft zugeführten Druckflüssigkeit eine andere Druckflüssigkeit zugeimpft wird, die eine andere Temperatur als die erste Druckflüssigkeit aufweist.

Dies kann nach ersten Augestaltung der Erfindung durch eine Mengenregler nach Anspruch 6 verwirklicht werden, der eine Druckflüssigkeit einer bestimmten konstanten Temperatur, die von der der linienkrafterzeugenden Druckflüssigkeit abweicht, den Lagertaschen zuführt. Eine alternative Ausgestaltung ist Gegenstand des Anspruchs 7 . Bei dieser Ausführungsform wird die Druckflüssigkeitstemperatur geregelt, d.h. in pro Zeiteinheit gleichbleibender Menge zugeführt und die Temperatur dieser Menge geregelt.

Es versteht sich, daß auch Mischformen dieser beiden Regelungen nicht ausgeschlossen sind.

In der einfachsten Ausführungsform nach Anspruch 8 sind die Regler handbetätigt, z.B. über Schieberorgane, die jedem einzelnen Stützelement oder einer Gruppe von Stützelementen zugeordnet sind.

Es kann aber auch eine Temperaturfühlereinrichtung vorgesehen sein, die die an der Walze vorhandene Temperaturverteilung kontrolliert und über ein entsprechendes Programm, welches vorher empirisch oder rechnerisch ermittelt worden ist, die bei einer Abweichung von einer gewünschten Temperaturverteilung notwendigen Mengen der zuzuimpfenden Druckflüssigkeit einer anderen Temperatur steuert (Anspruch 9).

Die Automatisierung kann durch die Weiterbildung nach Anspruch 10 noch gesteigert werden. Hierbei umfaßt das vorher eingegebene, empirisch oder rechnerisch ermittelte Programm die bei einer Druckänderung zwangsläufig eintretenden unerwünschten Temperaturänderungen und die zu ihrem Ausgleich notwendigen Maßnahmen, d.h. Mengen der zuzuführenden Druckflüssigkeit abweichender konstanter Temperatur oder Temperaturen der zuzuführenden Druckflüssigkeit konstanter Menge.

Die Erfindung verwirklicht sich auch ganz allgemein in dem Gedankten nach Anspruch 11, nämlich dem Gedanken der Zuimpfung einer zweiten Druckflüssigkeit abweichender Temperatur, um die Effekte der "Flüssigkeitsreibung" auszugleichen.

Ein Vorteil dieses Verfahrens besteht unter anderem darin, daß für die Beeinflussung der Stützelemente nur die relativ geringe Menge der "zweiten" Druckflüssigkeit geregelt werden muß, nicht aber die Gesamtmenge, die zur Aufrechterhaltung des Linienkraftprofils den Lagertaschen der diversen Stützelemente zugeführt wird.

In der Zeichnung sind Ausführungsbeispiele der Erfindung schematisch dargestellt.

Fig. 1 zeigt eine Ansicht eines Walzenpaars, bei welchem die erfindungsgemäße Walze Unterwalze ist;

Fig. 2 und 3 zeigen durch die Achse der Walze gehende Längsschnitte zweier Ausführungsformen eines einzelnen Stützelements;

Fig. 4 bis 7 zeigen schematisch verschiedene Ausführungsformen der Regelung der zusätzlich zugeführten Druckflüssigkeit.

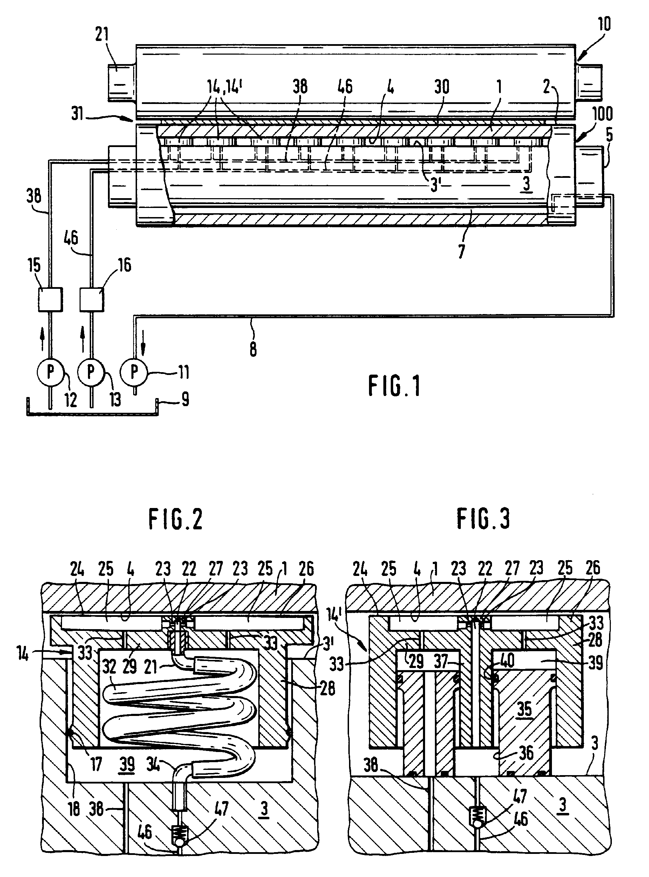

Das in Fig. 1 dargestellte Walzenpaar umfaßt eine Oberwalze 10 und eine Unterwalze 100, zwischen denen eine Warenbahn 30 einer Druckbehandlung in dem Walzspalt 31 ausgesetzt wird. Die Oberwalze 10 ist eine

EP 0 364 753 B1

konventionelle massive Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 verlagern kann, ohne mit dem Innenumfang 4 in Berührung zu kommen. Die Hohlwalze 1 kann an den Enden auf nicht dargestellten Lagern auf dem Querhaupt 3 abgestützt sein. In diesem Fall betrifft die Verlagerung nur die Durchbiegung des Querhauptes 3 im Innern der Hohlwalze 1. Die Hohlwalze 1 kann aber in einer alternativen Ausführungsform, die auch als eine solche mit "innerem Hub" bezeichnet wird, sich als Ganzes in der Wirkebene gegenüber dem Querhaupt 3 verlagern. Die Hohlwalze 1 ist in diesem Fall nicht über die Lager auf dem Querhaupt 3 abgestützt, sondern nur in der Wirkebene geführt. Die Verlagerung betrifft hierbei die Verlagerung in der Führung, der sich die Durchbiegung überlagert.

Die Zapfen 21 der Oberwalze 10 sowie die aus der Hohlwalze 1 an deren Enden vorstehenden Enden 5 des Querhauptes 3 sind im nicht dargestellten Walzenständer befestigt.

Auf der gegen den Walzspalt 31 gerichteten Oberseite 3' des Querhauptes 3 sind über die Länge der Hohlwalze verteilt mehrere, in dem dargestellten Ausführungsbeispiel neun, hydraulische Stützelemente 14 angeordnet, die mit ihrer dem Innenumfang 4 der Hohlwalze 1 in der Gestalt angepaßten Anlagefläche 24 am Innenumfang 4 der Hohlwalze 1 anliegen. In der Anlagefläche 24 sind flache Lagertaschen 25 ausgebildet, die einen wesentlichen Teil der Anlagefläche 24 einnehmen, so daß von ihr nur berandende Stege übrigbleiben. In den Ausführungsbeispielen ist das Stützelement 14 im Querschnitt kreisrund. Die Anlagefläche 24 weist einen um den ganzen Umfang herumgehenden Randsteg 26 sowie einen diametralen Mittelsteg 27 auf, so daß zwei etwa halbkreisscheibenförmige Lagertaschen 25 gebildet sind.

Das Stützelement 14 umfaßt ein etwa topfförmiges Gehäuse 28, welches mit der offenen Seite dem Querhaupt 3 zugewandt ist und einen Boden 29 aufweist, an dessen Unterseite die Lagertaschen 25 vorgesehen sind. In der Nähe des Randes des Topfes ist eine Umfangsdichtung 17 vorgesehen, mit der das topfförmige Gehäuse 28 in einer als radiale Sackbohrung ausgebildeten Zylinderbohrung 18 des Querhauptes dichtend geführt ist. Die Zylinderbohrung 18 bildet mit dem topfförmigen Gehäuse 28 einen Zylinderraum 39, der über eine im Querhaupt 3 verlaufende Zuleitung 38 von außerhalb der Walze mit Druckflüssigkeit versorgt werden kann. Die Druckflüssigkeit in der Zylinderkammer 39 tritt über Drosselbohrungen 33 im Boden 29 des Stützelements 14 in die Lagertaschen 25 über. Von dort strömt sie über die Berandung 26, die einen Teil der Anlagefläche 24 bildet, nach außen ab. In dem der Berandung 26 entsprechenden Teil der Anlagefläche 24 besteht also ein stabiler Flüssigkeitsfilm, auf dem sich das Stützelement 14 am Innenumfang 4 der Hohlwalze 1 abstützt.

In der Mitte des Bodens 29 im Bereich des Mittelsteges 27 ist ein abgewinkelter Schlauchstutzen 21 angebracht, der in eine auf der Achse des Stützelements 14 liegende Bohrung 22 einmündet, von der Drosselkanäle 23 in die beiden Lagertaschen 25 ausgehen. Auf den Schlauchstutzen 21 ist ein Schlauch 32 aufgeschoben, der sich in einigen Windungen im Innern des topfförmigen Gehäuses 28 erstreckt und in einen Schlauchstutzen 34 am Boden der Zylinderbohrung 18 mündet, der mit einer Zuleitung 46 im Querhaupt 3 in Verbindung steht. Die durch die Zuleitung 46 zugeführte Druckflüssigkeit tritt über die Drosselbohrungen 23 in die Lagertaschen 25 aus und kann beispielsweise dazu dienen, die Temperatur der Lagertaschen 25, die sonst von der Temperatur der an der Zuleitung 38 zugeführten Druckflüssigkeit abhängt, zu modifizieren.

Der Schlauch 32 stellt einen beweglichen Teil der Zuleitung 46 dar, mit welcher die Druckflüssigkeit aus dem Querhaupt 3 in die Lagertaschen 25 des sich gegenüber dem Querhaupt 3 radial verlagernden Stützelements 14 gebracht werden kann.

Soweit die Teile des Stützelements 14' der Fig. 3 denen des Stützelements 14 der Fig. 2 entsprechen, sind die Bezugszahlen gleich.

Das topfförmige Gehäuse 28 ist hierbeinicht an seiner Außenseite in einer Zylinderbohrung 18 des Querhauptes 3 geführt, sondern an seiner Innenseite an einem auf die Oberseite 3' des Querhauptes 3 aufgesetzten Kolben 35. Die Zylinderkammer 39, unter deren Druck das Stützelement 14' gegen den Innenumfang 4 der Hohlwalze 1 gepreßt wird, befindet sich in diesem Fall zwischen der Oberseite des Kolbens 35 und dem Boden 29. Der Kolben 35 hat eine zentrale Bohrung 36, die mit der Zuleitung 46 in Verbindung steht und in die ein rohrförmiger Ansatz 37 des Bodens 29 mittels einer Dichtung 40 abgedichtet eintaucht. Der rohrförmige Ansatz 37 in der Bohrung 36 bildet eine Art zusätzlicher Kolben/Zylindereinheit und enthält die zu den Drosselkanälen 23 führende Bohrung 22. Das Stützelement 14' kann sich gegenüber dem auf der Oberseite 3' des Querhauptes 3 befindlichen Kolben 35 in der gleichen Weise radial bewegen wie das Stützelement 14 in der Zylinderbohrung 18.

Bei beiden Stützelementen 14,14' ist in der zusätzlichen Zuleitung 46 zu den Lagertaschen 25 ein Rückschlagventil 47 vorgesehen, damit nicht im Fall fehlenden Druckes in der Zuleitung 46 Druckflüssigkeit aus den Lagertaschen 25 über die Leitung 22 zurückströmen kann.

Die Beaufschlagung der Stützelemente 14,14' ist aus Fig. 1 ersichtlich. Die Pumpe 12 saugt aus dem Vor-

4

ratsbehälter 9 Druckflüssigkeit an und führt sie über die Steuereinrichtung 15 und die Zuleitung 38 den einzelnen Stützelementen 14,14′ zu. Zur Beeinflussung des Liniendrucks kann auch Gruppen von Stützelementen 14,14′ oder sogar jedem einzelnen dieser Stützelemente 14,14′ ein separater Druck zugeführt werden. Die Leitung 38 ist nur symbolisch als eine einzige Leitung dargestellt, kann aber in der Praxis auch aus mehreren zu einzelnen Gruppen von Stützelementen oder einzelnen Stützelementen hinführenden Leitungen bestehen, denen in der Steuereinrichtung 15 unterschiedliche Drücke aufgeprägt werden.

Die Pumpe 13 saugt ebenfalls aus dem Voratsbehälter 9 Druckflüssigkeit an, die über eine Steuereinrichtung 16 der Zuleitung 46 und über diese den einzelnen Stützelementen 14,14′ zugeleitet wird. Diese Druckflüssigkeit wird in der Steuereinrichtung 16 auf einen Druck, der natürlich oberhalb des in den Lagertaschen 25 sich einstellenden Druckes liegen muß, sowie auf eine bestimmte Temperatur eingestellt. Auch die Zuleitungen 46 können Mehrfachleitungen sein, mit denen Gruppen von Stützelementen 14,14′ oder einzelne Stützelemente 14,14′ beaufschlagt werden können.

Die den einzelnen Stützelementen 14,14′ zugeführte Druckflüssigkeit tritt über den Rand der Stützelemente 14,14′ in den Zwischenraum 7 zwischen Querhaupt 3 und Innenumfang 4 der Hohlwalze 1 aus und wird daraus über die Leitung 8 von der Pumpe 11 abgesaugt und in den Vorratsbehälter 9 zurückgeführt.

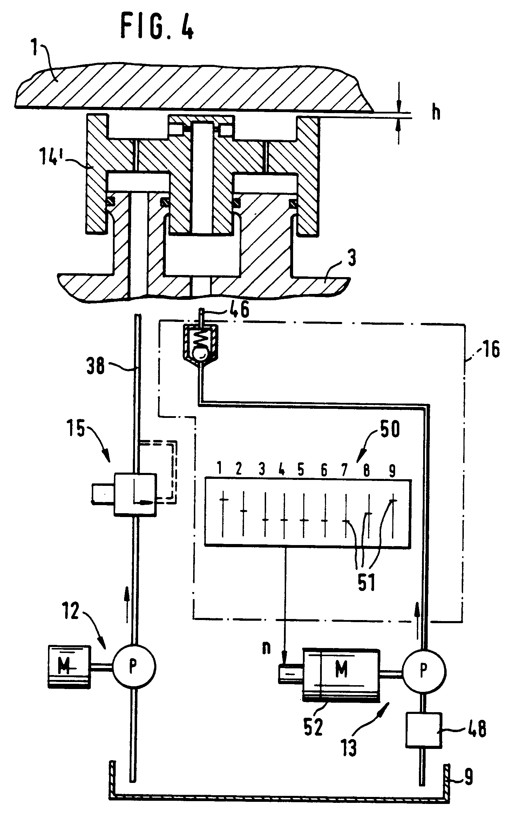

In den Fig. 4 bis 7 sind verschiedene Ausführungsformen der in Fig. 1 nur angedeuteten "Steuereinrichtung 16" mehr im einzelnen dargestellt. Soweit funktionell einander entsprechende Teile vorhanden sind, sind die Bezugszahlen gleich geblieben.

Die Steuereinrichtung 16 der Fig. 4 umfaßt einen handbetätigten Mengenregler 50, der für jeden der neun Stützstempel 14′ der Walze 100 einen Schieberegler 51 aufweist, mit welchem die Drehzahl des Motors 52 der dem betreffenden Stützelement 14′ zugeordneten Pumpe 13 oder eines solchen Pumpenteils auf einen gewünschten Wert eingeregelt werden kann. Die betreffende Pumpe 13 ist eine Zwangsförderpumpe, die aus dem Vorratsbehälter 9 Druckflüssigkeit entnimmt, die in dem Wärmetauscher 48 auf eine bestimmte Temperatur eingestellt wird, die von der Temperatur der von der Pumpe 12 geförderten Druckflüssigkeit abweicht. Je nach dem wieviel von dieser Druckflüssigkeit abweichender Temperatur dem einzelnen Stützelement 14′ zugeleitet wird, erfolgt eine mehr oder weniger große Beeinflussung der Temperatur im Bereich des Stützelements 14. Die Temperatur der von der Pumpe 12 geförderten Druckflüssigkeit kann im Bereich der Zimmertemperatur liegen, jedoch auch bis etwa 280°C bis 300°C erhöht sein, wenn die Walze 100 beispielsweise eine Walze zum Verfestigen von Vlies aus thermoplastischen Fasern ist.

Die Regelung der Temperatur am Umfang der Walze 100 erfolgt gemäß Fig. 4 von Hand durch entsprechendes Verschieben der Schiebeorgane 51, wobei das Maß der Verschiebung durch die der Bedienungsperson zugänglichen Erfahrenswerte bestimmt wird.

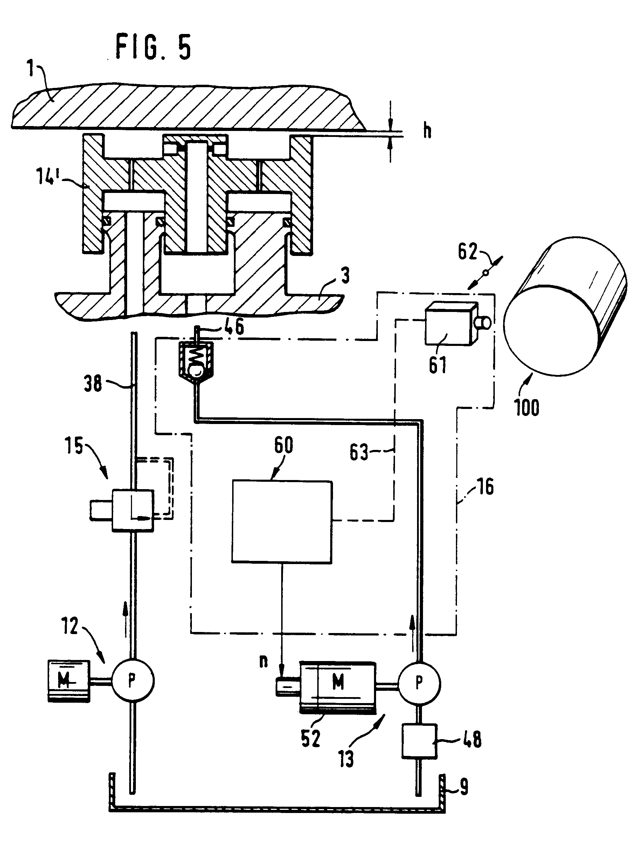

Bei der Ausführungsform nach Fig. 5 bedarf es einer erfahrenen Bedienungsperson nicht mehr. Es wird hierbei die Temperatur längs der Oberfläche der Walze 100 durch eine Temperaturfühlereinrichtung 61, beispielsweise ein Strahlungsthermometer od.dgl. abgetastet, welches im Sinne des Pfeiles längs der Walze 100 hin- und herbewegbar ist. Die Meßwerte werden in Gestalt elektrischer Größen über die Leitung 63 einem Rechner 60 zugeleitet, in welchem ein Programm enthalten ist, welches den "Erfahrungswerten der Bedienungsperson" in der Ausführungsform nach Fig. 4 entspricht. Aus den Abweichungen des gemessenen Temperaturverlaufs längs der Walze 100 von einem Soll-Temperaturverlauf und den vorher rechnerisch oder empirisch festgelegten Auswirkungen einer bestimmten Änderung der Menge an Zuimpfflüssigkeit bildet der Rechner 60 einen Stellwert für den Motor 52 für jede der den einzelnen Stützelementen 14′ zugeordneten Pumpen 13 oder Pumpenteile, wodurch den einzelnen Stützelementen 14 entsprechende Mengen der in dem Wärmetauscher 48 temperierten Druckflüssigkeit zusätzlich zugeleitet werden.

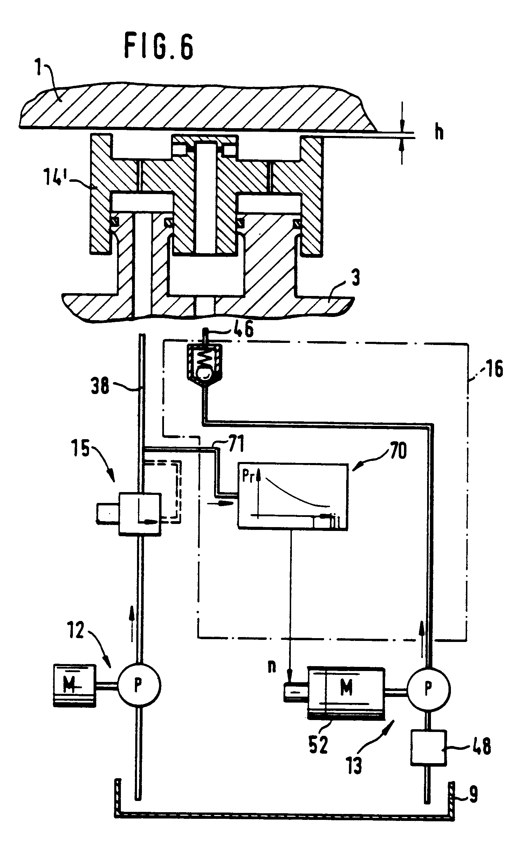

Noch einen Schritt weiter geht die Ausführungsform nach Fig. 6 . Hier ist wiederum ein Rechner 70 vorgesehen, der den Antriebsmotor 52 der einzelnen Pumpen 13 steuert und den Stützelementen 14′ entsprechende Mengen der in dem Wärmetauscher 48 temperierten zusätzlichen Druckflüssigkeit zuleitet.

Im Gegensatz zu der Ausführungsform nach Fig. 5 bedarf es bei der Ausführungsform nach Fig. 6 jedoch keiner Temperaturmessung an der Walze, sondern es ist das in dem Rechner 70 gespeicherte Programm, welches durch das kleine Diagramm in dem den Rechner 70 symbolisierenden Rechteckkasten angedeutet ist, so umfangreich, daß darin auch die bei einer bestimmten Druckänderung sich einstellenden, auf die "Flüssigkeitsreibung" (im weitesten Sinn) zurückzuführenden Temperaturstörungen enthalten sind. Das Programm umfaßt also bereits die Temperaturfehler, die die Temperaturfühlereinrichtung 61 nach Fig. 5 ermitteln könnte. Der Rechner 70 "weiß" also, welche Korrekturen er vornehmen muß, wenn nur der Anpreßdruck (über die Leitung 71) eingegeben wird, um eine durch die durch die Pumpe 12 geförderte primäre Druckflüssigkeit sich ergebende Temperaturverteilung aufrechtzuerhalten.

Bei den Ausführungsbeispielen der Fig. 4 bis 6 wird die zusätzlich zugeimpfte Druckflüssigkeit in dem Wärmetauscher 48 auf eine konstante, von der Temperatur der durch die Pumpe 12 geförderten primären Druckflüssigkeit verschiedene Temperatur gebracht. Von dieser Druckflüssigkeit werden geregelte Mengen

5

zugeimpft.

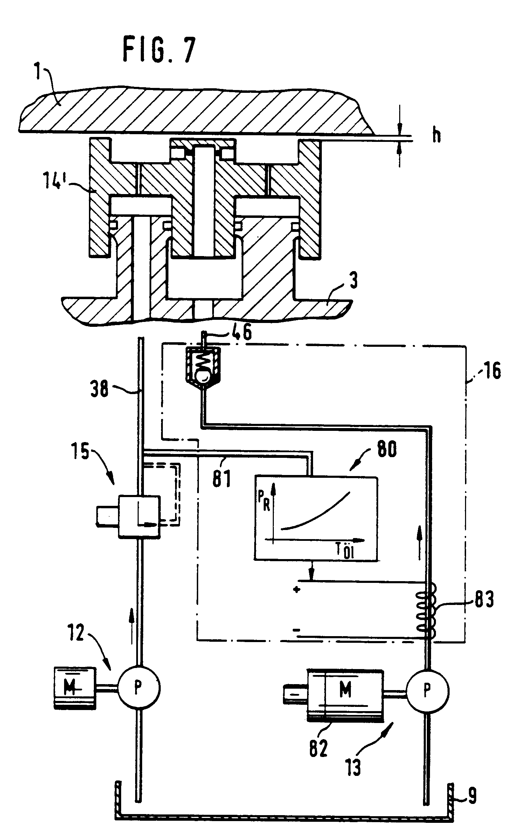

Bei dem Ausführungsbeispiel der Fig. 7 hingegen fördert die jedem Stützelemente 14' (oder Gruppen solcher Stützelemente) zugeordnete, von dem ungeregelten Motor 82 angetriebene Pumpe 13 eine zeitlich konstante Menge an Druckflüssigkeit in die Lagertaschen 25 der Stützelemente 14'.

Es ist auch in Fig. 7 ein Rechner 80 vorgesehen, dem der Gesamtzusammenhang der Einflußgrößen als Programm eingegeben ist. Der Rechner 80 steuert eine Temperier einrichtung 83, die in dem Ausführungsbeispiel als Widerstandsheizelement mit einer Drahtspule angedeutet ist. In Abhängigkeit vom Anpreßdruck der Stützelemente 14', dessen Signal dem Rechner 80 über die Leitung 81 eingegeben wird, steuert der Rechner 80 die Temperiervorrichtung 83 so, daß die dem Stützelement 14' zugeführte konstante Menge an Zuimpfflüssigkeit mehr oder weniger aufgeheizt wird. Es versteht sich, daß die Temperiervorrichtung 83 nicht unbedingt eine Heizvorrichtung sein muß sondern auch eine Kühlvorrichtung sein kann.

**Patentansprüche**

1. Durchbiegungssteuerbare Walze (100),
mit einer den arbeitenden Walzenumfang (2) bildenden umlaufenden Hohlwalze (1) und einem diese der Länge nach durchgreifenden, rundum Abstand vom Innenumfang (4) der Hohlwalze (1) belassenden undrehbaren Querhaupt (3), und mit mehreren längs des Querhaupts (3) aufgereihten, an dem Querhaupt (3) radial unter dem Druck einer Druckflüssigkeit an mindestens einer Kolben/Zylindereinheit (28,18;35,28) verlagerbaren hydrostatischen Stützelementen (14,14'), welche in ihrer am Innenumfang (4) der Hohlwalze (1) zur Anlage bringbaren Anlagefläche (24) ringsum berandete Lagertaschen (25) aufweisen, die über Drosselkanäle (33) mit der Zylinderkammer (39) der Kolben/Zylindereinheit (28,18;35,28) in Verbindung stehen und mit Druckflüssigkeit versorgt werden,
dadurch gekennzeichnet,
daß das Stützelement (14,14') eine separate Zuleitung (46) aufweist, die über eine Drosselstelle (23) in die Lagertaschen (25) des Stützelements (14,14') münden und mittels deren den Lagertaschen (25) zusätzliche Druckflüssigkeit zuführbar ist.

2. Walze nach Anspruch 1, dadurch gekennzeichnet, daß die Zuleitung (46) einen beweglichen, sich vom Querhaupt (3) zum Gehäuse (28) des Stützelements (14) erstrekkenden Schlauch (32) umfaßt.

3. Walze nach Anspruch 1, dadurch gekennzeichnet, daß die Zuleitung (46) einen teleskopartigen Teile umfaßt und ein Ende des Teleskopfs am Querhaupt (3), das andere Ende am Gehäuse (28) des Stützelements (14') angebracht ist.

4. Walze nach Anspruch 3 mit mindestens einer zusätzlichen, separat mit Druckflüssigkeit beaufschlagbaren Kolben/Zylindereinheit, deren einer Teil mit dem Stützelement und deren anderer Teil mit dem Querhaupt verbunden ist, dadurch gekennzeichnet, daß auf der dem Innenumfang (4) der Hohlwalze (1) abgewandten Seite des Stützelements (14') ein rohrförmiger Ansatz (37) vorgesehen ist, der an seinem Außenumfang abgedichtet, jedoch axial beweglich in eine mit der Zuleitung (46) im Querhaupt (3) in Verbindung stehende Bohrung (40) am Querhaupt (3) eintaucht.

5. Walze nach einem der Ansprüche 1 bis 4, bei der das Stützelement (14,14') mehrere durch einen mittleren Steg (27) voneinander getrennte Lagertaschen (25) aufweist, dadurch gekennzeichnet, daß die Zuleitung (46) bis in den Steg (27) verläuft und über seitliche Drosselkanäle (23) in die benachbarten Lagertaschen (25) ausmündet.

6. Walze nach einem der Ansprüche 1 bis 5, dadurch gekennzeichnet, daß für jedes Stützelement (14,14') ein Mengenregler (50,60,70) für die zugeimpfte, eine vorbestimmte konstante Temperatur aufweisende Druckflüssigkeit vorgesehen ist.

7. Walze nach einem der Ansprüche 1 bis 5, dadurch gekennzeichnet, daß für jedes Stützelement (14,14') ein Temperaturregler (80) für die mit einer vorbestimmten konstanten Menge pro Zeiteinheit zugeimpfte Druckflüssigkeit vorgesehen ist.

8. Walze nach Anspruch 6 oder 7, dadurch gekennzechnet, daß die Mengenregler (50) bzw. Temperaturregler handbetätigt sind.

9. Walze nach Anspruch 6 oder 7, dadurch gekennzeichnet, daß eine Temperaturfühlereinrichtung (61) mit zugeordnetem Rechner (60) vorgesehen ist, die anhand der an der Walze (100) gemessenen Temperaturverteilung und eines vorher eingegebenen Programms die Menge bzw. Temperatur der Druckflüssigkeit steuert.

10. Walze nach Anspruch 6 oder 7, dadurch gekennzeichnet, daß ein Rechner (70,80) vorgesehen ist, der anhand des Anspreßdrucks und eines vorher eingegebenen Programms die Menge bzw. Temperatur der zugeimpften Druckflüssigkeit steuert.

11. Verfahren zur Regelung der Temperaturverteilung in einer durchbiegungssteuerbaren Walze (100) mit einer den arbeitenden Walzenumfang (2) bildenden umlaufenden Hohlwalze (1) und einem diese der Länge nach durchgreifenden, rundum Abstand vom Innenumfang (4) der Hohlwalze (1) belassenden undrehbaren Querhaupt (3),

und mit mehreren längs des Querhaupts (3) aufgereihten, an dem Querhaupt (3) radial unter dem Druck einer Druckflüssigkeit an mindestens einer Kolben/Zylindereinheit (28,18;35,28) verlagerbaren hydrostatischen Stützelementen (14,14'), welche in ihrer am Innenumfang (4) der Hohlwalze (1) zur Anlage bringbaren Anlagefläche (4) ringsum berandete Lagertaschen (25) aufweisen, die über Drosselkanäle (33) mit der Zylinderkammer (39) der Kolben/Zylindereinheit (28,18;35,28) in Verbindung stehen und mit Druckflüssigkeit versogt werden,

bei welchem die Temperatur der Walze (100) durch eine entsprechende Temperatur der den Lagertaschen (25) zugeführten Druckflüssigkeit eingestellt wird,

dadurch gekennzeichnet,

daß den Lagertaschen (25) ein zweite Druckflüssigkeit abweichende Temperatur zugeimpft wird, um die durch die Druckeinstellung der Stützelemente (14,14') auftretenden Temperatur fehler auszugleichen.


## Claims

1. A controlled deflection roll (1ØØ) comprising a rotating shell (1) effective as the operative roll periphery (2) and a non-rotating beam (3) which extends throughout the length of the shell (1) at a distance all the way round from the shell inner periphery (4), and having a number of hydrostatic support elements (14, 14') which are disposed in a row along the beam (3) and which are movable radially thereon by the pressure of a pressure liquid effective in at least one reciprocating actuator unit (28, 18; 35, 28) and which have, in their contact or engagement surface (24) engageable with the shell inner periphery (4), bearing pockets (25) which are arranged around the edge, communicate by way of restrictor passages (33) with the cylinder chamber (39) of the reciprocating actuator unit (28, 18; 35, 28) and are supplied with pressure liquid, characterised in that, the support element (14, 14') has a separate feed line (46) which extends by way of a restrictor (23) into the bearing pockets (25) of the support element (14, 14') and by means of which additional pressure liquid can be supplied to such pockets (25).

2. A roll according to claim 1, characterised in that the feed line (46) comprises a movable hose (32) which extends from the beam (3) to the casing (28) of the support element (14).

3. A roll according to claim 1, characterised in that the feed line (46) comprises a telescopic part and one end of the telescopic head is attached to the beam (3) and the other end to the support element casing (28).

4. A roll according to claim 3 having at least one additional reciprocating actuator unit adapted to be supplied separately with pressure liquid, one part of such unit being connected to the support element and the other part to the beam, characterised in that a tubular extension (37) is provided on that side of the support element (14') which is remote from the shell inner periphery (4) , and the tubular extension (37) is sealed on its outer periphery but can move axially to dip into a bore (4Ø) in the beam (3), the latter bore communicating with the feed line (46) in the beam (3).

5. A roll according to any of claims 1 to 4 in which the support element (14, 14') has a number of bearing pockets (25) separated from one another by a central web (27), characterised in that the feed line (46) extends as far as the web (27) and issues by way of lateral restrictor ducts (23) into the adjacent bearing pockets (25).

6. A roll according to any of claims 1 to 5, characterised in that a quantity controller (500, 600, 7Ø) for the injected pressure liquid, which has a predetermined constant temperature, is provided for each support element (14, 14').

7. A roll according to any of claims 1 to 5, characterised in that a temperature controller (8Ø) for the pressure liquid injected in a predetermined constant quantity per unit of time is provided for each support element (14, 14').

8. A roll according to claim 6 or 7, characterised in that the quantity controllers (5Ø) and/or temperature controllers are operated manually.

9. A roll according to claim 6 or 7, characterised in that a temperature sensor (61) having an associated computer (6Ø) is provided and controls the quantity and/or temperature of the pressure liquid with reference to the temperature distribution measured on the roll (1ØØ) and to a preset program.

1Ø. A roll according to claim 6 or 7, characterised in that a computer (7Ø, 8Ø) controlling quantity and/or temperature of the injected pressure liquid with reference to the pressing pressure and a preset program is provided.

11. A method of controlling the temperature distribution in a controlled deflection roll (1ØØ) having a rotating shell (1) effective as the operative roll periphery (2) and a non-rotating beam (3) which extends throughout the length of the shell (1) with a gap all the way round from the shell inner periphery (4), and having a number of hydroetatic support elements (14, 14') which are placed in a row along the main beam (3) and which are movable radially thereon by the pressure of a pressure liquid effective in at least one reciprocating actuator unit (28, 18; 35, 28), the support elements (14, 14') having, in their contact surface (24) engageable with the shell inner periphery (4), bearing pockets (25) which are disposed peripherally at the edges, communicate by way of restrictor ducts (33) with the cylinder chamber (39) of the reciprocating actuator unit (28, 18; 35, 28) and are supplied with pressure liquid,

the roll temperature being adjusted by a corresponding temperature of the pressure liquid supplied to the bearing pockets (25),

characterised in that,

a second pressure liquid of a different temperature is injected into the bearing pockets (25) in order to compensate for temperature errors due to the pressure adjustment of the support elements (14, 14').

## Revendications

1. Rouleau (100) à compensation de flèche, un rouleau creux (1) rotatif formant la périphérie de travail (2) et une traverse (3), fixe, traversant le rouleau creux sur toute sa longueur et laissant tout autour un intervalle par rapport à la surface intérieure (4) du rouleau (1), ainsi que plusieurs éléments de soutien (14, 14') hydrostatiques, répartis le long de la traverse (3) et qui peuvent se déplacer radialement par rapport à la traverse (3) sous la pression d'un fluide sous pression agissant sur au moins un ensemble piston/cylindre (28, 18 ; 35, 28), ces éléments comportant des poches de palier (25) susceptibles de venir en appui contre la surface intérieure (4) du rouleau creux (1) par des surfaces de soutient (24) bordées de façon périphérique, ces poches communiquant par les canaux d'étranglement (33) avec la chambre de vérin (39) des ensembles piston/cylindre (28, 18 ; 35, 28) et qui sont alimentées en fluide sous pression, rouleau caractérisé en ce que :
l'élément de soutient (14, 14') comporte une conduite d'alimentation (46) distincte qui débouche par un point d'étranglement (23) dans la poche de palier (25) de l'élément de soutient (14, 14') et fournit du fluide sous pression complémentaire à la poche de palier (25).

2. Rouleau selon la revendication 1, caractérisé en ce que la conduite d'alimentation (46) comprend un tuyau (32) mobile qui relie la traverse (3) au boîtier (28) de l'élément de soutient (14).

3. Rouleau selon la revendication 1, caractérisé en ce que la conduite d'alimentation (46) comprend une partie télescopique dont une extrémité est reliée à la traverse (3) et l'autre extrémité est reliée au boîtier (28) de l'élément de soutient (14').

4. Rouleau selon la revendication 3 comportant au moins un ensemble piston/cylindre complémentaire alimenté séparément en fluide sous pression et dont une partie est reliée à l'élément de soutien et l'autre partie est reliée à la traverse, caractérisé en ce que sur le côté de l'élément de soutien (14') non tourné contre la surface intérieure (4') du rouleau creux (1), il est prévu un prolongement tubulaire (37) qui pénètre dans un perçage (40) réalisé dans la traverse (3), avec sa surface extérieure rendue étanche tout en étant mobile axialement, ce perçage communiquant avec la conduite (46) de la traverse (3).

5. Rouleau selon l'une des revendications 1 à 4, caractérisé en ce que l'élément de soutien (14, 14') comprend plusieurs poches de palier (25) séparées les unes des autres par une entretoise médiane (27), caractérisé en ce que la conduite d'alimentation (46) arrive jusque dans l'entretoise (27) et débouche dans les poches de palier (25) adjacentes par des canaux d'étranglement (23) latéraux.

6. Rouleau selon l'une des revendications 1 à 5, caractérisé en ce que pour chaque élément de soutien (14, 14'), il est prévu un organe de réglage de débit (50, 60, 70) pour l'injection de fluide sous pression qui est à une température constante prédéterminée.

7. Rouleau selon l'une des revendications 1 à 5, caractérisé en ce que pour chaque élément de soutient (14, 14'), il est prévu un organe de réglage de température (80) pour le fluide sous pression injecté suivant une quantité prédéterminée par unité de temps.

8. Rouleau selon la revendication 6 ou 7, caractérisé en ce que les organes de réglage de débit (50) ou de température se règlent manuellement.

9. Rouleau selon la revendication 6 ou 7, caractérisé par un dispositif à capteur de température (61) associé à un calculateur (60) qui commande le débit ou la température du fluide sous pression à l'aide d'une distribution de température mesurée sur le rouleau (100) ou d'un programme introduit préalablement.

10. Rouleau selon la revendication 6 ou 7, caractérisé par un calculateur (70, 80) qui commande le débit ou la température du fluide sous pression, injecté en fonction de la pression d'application ou d'un programme prédéterminé.

11. Procédé de régulation de la répartition de la température d'un rouleau (100) à compensation de flèche, un rouleau creux (1) rotatif formant la périphérie de travail (2) et une traverse (3), fixe, traversant le rouleau creux sur toute sa longueur et laissant tout autour un intervalle par rapport à la surface intérieure (4) du rouleau (1),

ainsi que plusieurs éléments de soutien (14, 14') hydrostatiques, répartis le long de la traverse (3) et qui peuvent se déplacer radialement par rapport à la traverse (3) sous la pression d'un fluide sous pression agissant sur au moins un ensemble piston/cylindre (28, 18 ; 35, 28),

ces éléments comportant des poches de palier (25) susceptibles de venir en appui contre la surface intérieure (4) du rouleau creux (1) par des surfaces de soutient (24) bordées de façon périphérique, ces poches communiquant par les canaux d'étranglement (33) avec la chambre de vérin (39) des ensembles piston/cylindre (28, 18 ; 35, 28) et qui sont alimentées en fluide sous pression,

caractérisé en ce

qu'on injecte dans les poches de palier (25) un second fluide comprimé dont la température est différente pour compenser l'erreur de température engendrée par le réglage de la pression des éléments de soutien (14, 14').

FIG.1

FIG.2

FIG.3

## FIG. 4

FIG. 5

# FIG.6

# FIG. 7